# EUROPÄISCHE PATENTSCHRIFT

(11) **EP 2 136 963 B1**
(45) Veröffentlichungstag und Bekanntmachung des Hinweises auf die Patenterteilung: **22.12.2010**
(21) Anmeldenummer: 08715544.6
(22) Anmeldetag: 06.03.2008
(51) Int. Cl.: B23Q 11/08, E06B 9/15

(54) **GLIEDERSCHÜRZE**
LINK APRON
TABLIER À MAILLONS

(30) Priorität: 07.03.2007 DE 102007011136; 07.05.2007 DE 102007021310; 25.02.2008 DE 102008010956
(43) Veröffentlichungstag der Anmeldung: 30.12.2009
(73) Patentinhaber: Eitec Führungsbahnschutz-Systeme GmbH, 85301 Schweitenkirchen (DE)
(72) Erfinder: EISNER, Karl, Heinz, 85375 Neufahrn (DE)
(74) Vertreter: Winter, Brandl, Fürniss, Hübner, Röss, Kaiser, Polte - Partnerschaft
(86) Internationale Anmeldenummer: PCT/DE2008/000396
(87) Internationale Veröffentlichungsnummer: WO 2008/106957

(56) Entgegenhaltungen:
- EP-A- 1 488 885
- WO-A-02/08558
- DE-A1- 10 065 065

## Beschreibung

Die Erfindung betrifft eine Gliederschürze, insbesondere zur Abdeckung bewegbarer Werkzeugmaschinen oder sonstigen Öffnungen, nach dem Oberbegriff des Anspruchs 1.

Gliederschürzen werden verwendet, um Führungsbahnen von Werkzeugmaschinen vor Verschmutzungen, wie z. B. Späne und Kühlmittel (Spritz-, Schwallwasser), zu schützen und um die Unfallgefahr durch versehentliches Hineingreifen durch das Bedienpersonalt zu verhindern.

Eine gattungsgemäße Gliederbahn ist in der EP 1 488 885 B1 offenbart. Diese Druckschrift zeigt eine Gliederschürze, bei der die einzelnen Glieder jeweils über kederartige Gliederverbinder miteinander verbunden sind. Die jeweils benachbarten Glieder liegen oberhalb dieser Gliederverbinder abschnittsweise aneinander an, so dass ein Eindringen von Spänen in diesen Anlagebereich verhindert wird. Zur Vertikalzentrierung der beiden Glieder zueinander ist an der Anlagefläche eines Glieds ein dreiecksförmiger Vorsprung und an der Anlagefläche des anderen Glieds eine entsprechende Ausnehmung ausgebildet, in die der Vorsprung in der Streckstellung der Gliederschürze eintaucht. Nachteilig bei dieser Lösung ist, dass die dreiecksförmige Verzahnung zur Vertikalzentrierung relativ anfällig ist, da beim Einklemmen eines Spans eine Deformation des dreiecksförmigen Vorsprungs zu befürchten ist - die Zentrierfunktion und die Dichtfunktion der Gliederschürze ist dann erheblich beeinträchtigt. Des Weiteren ist Nachteilig, dass Spane, die zwischen die Anlageflächen von den Gliedern gelangen, kaum mehr aus diesen herausgelangen können, da diese Späne sich entweder zwischen Gliederverbinder und der Verzahnung befinden, oder direkt beim Schließen der Verzahnung in diese gepresst werden. Hierdurch ist ein glattes Anliegen der Anlageflächen der Glieder nicht mehr möglich.

Eine ähnliche Lösung ist in der DE 100 65 065 A1 offenbart, bei der im Bereich der Anlageflächen wechselweise gekrümmte Bereiche als Anlageflächen vorgesehen sind. Die einzelnen Glieder sind, wie bei der vorherigen Lösung, ebenfalls über kederartige Verbinder formschlüssig miteinander verbunden. Beim Abwinkeln der Gliederschürze entsteht ein großer Spalt an einem Abschnitt der Anlagefläche, in welchen sehr leicht Späne gelangen können, die die Zentrierfunktion der Gliederschürze stark einschränkt. Späne, welche sich zwischen den Anlageflächen befindet, kann wie in der EP 1 488 885 B1 kaum mehr aus diesen herausgelangen. Durch die aufwendige Geometrie der Anlageflächen ist außerdem ein erheblicher vorrichtungstechnischer Aufwand bei der Herstellung erforderlich, so dass eine derartige Gliederschürze sich aufgrund der hohen Fertigungs- und Herstellungskosten nicht durchsetzen lässt.

Aus der DE 10 2004 060 216 A1 ist eine weitere Lösung bekannt. Hier sind die einzelnen Glieder direkt über eine Kupplungsvorrichtung miteinander formschlüssig verbunden. Überhalb des Kupplungsbereichs ist, ähnlich wie in EP 1 488 885 B1, ein Vorsprung ausgebildet, welcher in eine Ausnehmung taucht. Hierbei ist Nachteilig, wie bei der DE 100 65 065 A1, das ein sehr breiter Spalt zwischen dem Vorsprung und der Ausnehmung, beim Abwinkeln zweier benachbarter Glieder, entsteht und in diesen Spalt Späne gelangen und eingeklemmt werden kann, was zu den Folgen wie bei der EP 1 488 885 B1 führt. Bei der Herstellung solcher Glieder müssen zwei Passungen berücksichtigt werden, um eine Vertikalzentrierung zu erreichen. Zum Einen ist eine Passung in der Kupplungsvorrichtung und zum anderen im Anlagebereich zweier Glieder erforderlich. Dadurch ist der Aufwand der Herstellung sehr hoch und somit mit hohen Kosten verbunden.

In der WO 02108558 A ist ein Rolltor offenbart, bei dem die einzelnen Glieder seitlich über flexible Streifen miteinander verbunden sind.

Demgegenüber liegt der Erfindung die Aufgabe zugrunde, eine Gliederschürze für Werkzeugmaschinen zu schaffen, bei der die Höhenzentrierung auf einfache, sichere und kostengünstige Weise ermöglicht ist.

Diese Aufgabe wird durch eine Gliederschürze mit den Merkmalen des Patentanspruchs 1 gelöst.

Erfindungsgemäß sind an benachbarten Gliedern einer Gliederschürze die oberhalb eines Gliederverbinders gelegenen Anlagebereiche der Seitenflächen an einem Glied als ballig gekrümmter Vorsprung ausgebildet, der in eine entsprechend konkav ausgebildete hohle Pfanne des anderen Gliedes eintaucht.

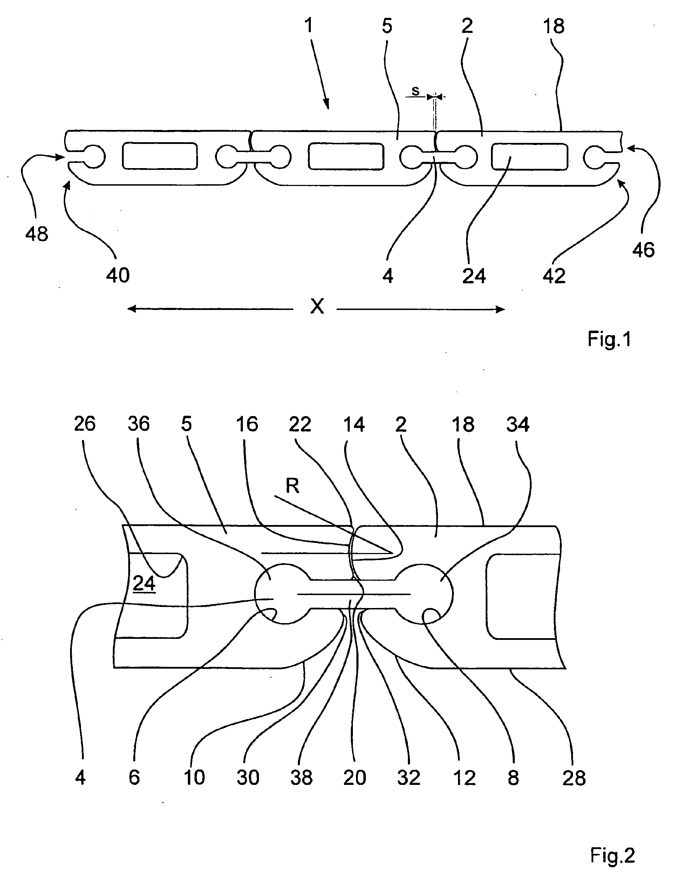

Es wird somit eine kugelgelenkartige Anlagefläche gebildet, bei der auch während der Relativverdrehung der Teile noch eine gewisse Dichtwirkung erzielt wird und die Gefahr einer Beschädigung durch ein Eindringen von Spänen minimal ist. Aufgrund der einfachen Geometrie der Glieder ist die Herstellung äußerst einfach und günstig. Es zeigte sich überraschender Weise, dass mit einem derartigen kugelgelenkartigen Anlagebereich eine exakte Höhenzentrierung ermöglicht ist. Eine Höhenzentrierung findet selbst dann noch statt, wenn sich ein Span zwischen den Anlageflächen befindet, da die betroffenen Glieder dabei kaum in der relativen Höhe zueinander verschoben werden, sondern hauptsächlich in die Vertikalrichtung, welche mit einem X in Fig. 1 gezeigt ist.

Sonstige vorteilhafte Weiterbildungen der Erfindung sind Gegenstand der Unteransprüche.

Bei einem Ausführungsbeispiel liegen der Scheitel der Pfanne und der ballige Vorsprung etwa in der Mitte zwischen einer oberen Großfläche und einer dieser zuweisenden Fläche einer Aufnahme für den Gliederverbinder.

Vorzugsweise ist der Radius von der Pfanne und von dem Vorsprung etwa gleich, um einen bündigen Anlagenbereich zu realisieren, so dass der Spalt zwischen den Anlageflächen minimal wird. Der Radius ist beispielsweise mindestens 1mm groß. Bei einer Ausführung eines Beispiels beträgt dieser 1,6mm.

Die Pfanne und der Vorsprung erstrecken sich im Wesentlichen über die gesamte Höhe der oberhalb der Gliederverbinder gelegenen Seitenflächen.

Von Vorteil kann sein, wenn die, die Pfanne und den Vorsprung begrenzenden Seitenkanten, abgerundet sind, womit keine scharfen Kanten vorhanden sind, welche im Betrieb der Gliederschürze beschädigt werden könnten und somit eine spandichte Anlage nicht mehr möglich wäre.

Die Gliederschürze lässt sich weiter verbessern, wenn etwa mittig in den jeweiligen Gliedern ein Hohlraum mit einer quadratischen Umfangsform eingebracht ist und sich dieser senkrecht zur Zeichenebene vollständig durch das jeweilige Glied hindurch erstreckt. Hierdurch kann Material und Gewicht eingespart werden.

Es kann auch von Vorteil sein, wenn die Aufnahmen des Gliederverbinders zylinderförmig sind und mittig an den jeweiligen Schmalseiten eine Gliederverbindernut eingebracht ist, welche sich von der Schmalseite bis zu den Aufnahmen erstreckt und wobei die Breite der Nüt kleiner als der Durchmesser der zylinderförmigen Aufnahme sein kann.

Unterhalb des Gliederverbinders, zwischen einer unteren Großfläche und einer dieser zuweisenden Fläche der Aufnahme können an den Gliedern auch Abrundungen ausgestaltet sein.

Ein bevorzugtes Ausführungsbeispiel der Erfindung wird im Folgenden anhand schematischer Zeichnungen näher erläutert. Es zeigen:
Fig. 1 eine Querschnittansicht einer Gliederschürze gemäß einem Ausführungsbeispiel;
Fig. 2 eine Querschnittansicht des Verbindungsbereichs zweier Glieder der Gliederschürze gemäß dem Ausführungsbeispiel.

Figur 1 zeigt ein Ausführungsbeispiel der Gliederschürze 1. Diese hat eine Vielzahl von Gliedern 2, 4 und von Gliederverbindern 6. Die Glieder 2, 5 bestehen aus Aluminium oder einer Aluminiumlegierung und die Gliederverbinder 4 aus Polyurethan, welches beständig gegen Kühlmittel ist, das bei einer, von einer die Gliederschürze 1 als Schutzabdeckung verwendenden Maschine im Betrieb erforderlich ist. Bei der maschinellen Verarbeitung von Magnesium bestehen die Glieder 2, 5 vorzugsweise aus Nirostastahl. Die angrenzenden Glieder 2, 5 der Gliederschürze 1 sind über die Gliederverbinder 4 miteinander formschlüssig verbunden. Im gestreckten Zustand der Gliederschürze 1, d. h. wenn die Glieder 2, 5 horizontal angeordnet sind, liegen die Seitenflächen zweier benachbarter Glieder 2, 5 flächig aneinander an, so dass kein Spalt oder ein kleiner Spalt von in etwa s=0,3 mm, siehe Figur 1, zwischen den einzelnen Gliedern 2, 5 vorhanden ist. Weiterhin bilden die oberen Großflächen 18 der Glieder 2, 5 im gestreckten Zustand eine planare bzw. ebene Gesamtoberfläche im Wesentlichen ohne Spalte oder mit kleinen Spalten aus, so dass z. B. Spane, die durch den Betrieb eines Werkzeuges entstehen, nicht zwischen die Glieder 2, 5 gelangen und somit die Funktion der Gliederschürze 1 beeinträchtigen oder beschädigen können.

Figur 2 zeigt eine Schnittdarstellung eines Teilbereichs zweier Glieder 2, 5 einer Gliederschürze 1 aus Figur 1, die mittels des kederartigen Gliederverbinders 4 miteinander verbunden sind. Dieser Gliederverbinder 4 ist in an den Seitenflächen der Glieder 2, 5 ausgebildeten Aufnahmen 6, 8 derart aufgenommen, dass die oberhalb (Ansicht nach der Fig. 2) gelegenen Abschnitte der Gliederseitenflächen zumindest abschnittsweise aneinander anliegen. Die Aufnahmen 6, 8 haben dabei einen zylinderförmigen Abschnitt, welcher auf beiden Seiten eines jeden Gliedes 2, 5 ausgebildet ist. In die Glieder 2, 5 ist mittig an beiden Schmalseiten 46, 48 (siehe Fig. 1) eine Gliederverbindernut 40, 42 eingebracht, welche sich von der Schmalseite 46, 48 bis zu den Aufnahmen 6, 8 des Gliedes erstreckt und eine Höhe hat, welche kleiner als der Durchmesser der zylinderförmigen Aufnahme 6, 8 ist.

Der Gliederverbinder 4 weist an seinen Seitenabschnitten ebenfalls jeweils zylinderförmige Bereiche 34, 36 auf, mit gleicher Größe und Form wie die Aufnahmen 6, 8 der Glieder 2, 5. Die zylinderförmigen Bereiche 34, 36 des Gliederverbinders 4 sind an einem gemeinsamen Steg 38 ausgebildet, dessen Breite in etwa der der beiden Gliederverbindernuten 40, 42 entspricht. Im verbauten Zustand verbindet der Gliederverbinder 4, durch seine Geometrie formschlüssig und bündig zwei Glieder 2, 5 und steht unter Zugspannung.

Etwa mittig in den Gliedern 2, 5 ist, zwischen den Aufnahmen 6, 8, ein quadratischer Hohlraum 24zwecks Material und Gewichtseinsparung eingebracht. Der Hohlraum 24 erstreckt sich, senkrecht zur Zeichenebene, dabei vollständig durch das Glied 2 bzw. 5 hindurch. Die vier Eckbereiche 26 des Hohlraums 24 sind aus fertigungstechnischen Gründen verrundet. Die Festigkeit und Steifigkeit der Glieder 2, 5 bleicht durch die Hohlräume 24 im Wesentlichen gleich.

Unterhalb des Gliederverbinders 4 sind die Seitenflächen mit Abrundungen 10, 12 an den Gliedern 2, 5 versehen und so ausgebildet, dass zwei verbundene Glieder 2, 5 in diesem Bereich beabstandet sind, wodurch die Gliederschürze 1 abwinkelbar ist. Das heißt, dass die Glieder so abgewinkelt werden können, so dass der Winkel zwischen den unteren Großflächen 28 zweier Glieder 2, 5 kleiner 180° wird und das Aufwickeln der Gliederschürze 1 dadurch ermöglicht wird. Die Kantenbereiche 30, 32, in die die Abrundungen 10, 12 auslaufen und welche dem Gliederverbinder 4 zuweisen, sind ebenfalls mit einem Radius versehen, damit der Gliederverbinder 4 beim Abwinkeln der Gliederschürze 1, entlang der Abrundungen 10, 12 abrollen kann. Wären statt den Abrundungen 10, 12 spitze Ecken ausgebildet, so würden sich diese beim Aufwickeln der Gliederschürze 1 in die Gliederverbinder 4 hineindrücken und könnten diesen beschädigen.

Bei der erfindungsgemäßen Lösung sind an den Anlagebereichen oberhalb der Gliederverbinder 4 jeweils an einer Seite der Glieder ein balliger Vorsprung 14 und an der jeweils anderen Seitenfläche eine entsprechend ausgestaltete Pfanne 16 ausgebildet, so dass zwei benachbarte Glieder 2, 5 entlang dieser Abschnitte 14, 16 aneinander liegen. Dabei taucht der ballige Vorsprung 14 in die konkav ausgeführte Pfanne 16 ein, so dass eine Höhenzentrierung (in Richtung nach oben und unten in der Figur 2) gewährleistet ist. Bei der dargestellten Lösung sind der Vorsprung 14 und die Pfanne 16 mit einem Radius ausgebildet, wobei dieser Radius relativ groß gewählt ist, so dass sich der Vorsprung 14 über die gesamte Breite des oberhalb des Gliederverbinders 4 gelegenen Anlagebereiches erstreckt. Die Pfanne 16 ist entsprechend ausgebildet, wobei die einer oberen Großfläche 18 und den Gliederverbindern 4 der Gliederschürze zugewandten, die Pfanne 16 begrenzenden Seitenkanten 20, 22 Radien vorgesehen werden, damit keine scharfen Kanten - wie beim eingangs beschriebenen Stand der Technik - vorhanden sind. Scharfe Kanten könnten im Betrieb der Gliederschürze beschädigt werden, so dass eine spänedichte Anlage nicht mehr gewährleistet ist.

Die Gliederverbinder 4 werden mit Zugspannung in die Aufnahmen 6, 8 eingesetzt, so dass in der dargestellten Streckstellung der Gliederschürze 1 eine zuverlässige, spänedichte Anlage gewährleistet ist. Wird die Gliederschürze 1 aufgewickelt, so entspannt sich der Gliederverbinder 4, die Zugspannung wird kleiner, wodurch gleichzeitig der Vorsprung 14 in der Pfanne 16, bis zu einer bestimmten Anstellwinkel, anliegend gleitet und abdichtet. Erst ab einem bestimmten Anstellwinkel entsteht ein leichter Spalt zwischen Vorsprung 14 und Pfanne 16. Gelangt ein Span dennoch zwischen Vorsprung 14 und Pfanne 16, so wird dieser, bei der Relativbewegung beider Flächen zueinander, aus dem Spalt geschoben.

Gemäß der Darstellung ist der Scheitel des Vorsprungs 14 und der tiefste Punkt der Pfanne 16 etwa in der Mitte zwischen der Großfläche 18 und der etwa parallel zu dieser verlaufenden Flächen der Aufnahme 6, 8 für den Gliederverbinder 4 ausgebildet. Beim dargestellten Ausführungsbeispiel ist der Radius R = 1,68 mm, wobei dieser Radius für eine Gliederschürze mit einer Dicke von 5,5 mm gewählt ist. Größere Glieder 1, 5 werden mit entsprechend größeren Radien ausgeführt.

In der Darstellung gemäß Figur 2 ist zur Vereinfachung der zeichnerischen Darstellung ein Spalt zwischen dem Vorsprung 14 und der Pfanne 16 dargestellt - in der Praxis ist dieser Spalt aufgrund der Vorspannung des kederartigen Gelenkverbinders 4 geschlossen, so dass die Glieder flächig entlang ihrer gekrümmten Anlagefläche aneinanderliegen.

Die erfindungsgemäße Konstruktion zeichnet sich aufgrund der kugelgelenkartigen Anlageflächen, die mit vergleichsweise großem Radius ausgeführt sind, durch eine einfache Herstellbarkeit bei hervorragender Spänedichtigkeit aus. Ein Höhenversatz bei benachbarten Gliedern 2, 5 zueinander wird durch die beschriebene Zentrierung zuverlässig verhindert. Des Weiteren ist diese großflächige Zentrieranlage auch weitestgehend unempfindlich gegen eindringende Späne, so dass selbst im ungünstigsten Fall, wenn ein Span in den Bereich zwischen Pfanne 16 und Vorsprung 14 gelangt, eine Beschädigung nicht zu befürchten ist.

Offenbart ist eine Gliederschürze mit einer Vielzahl von Gliedern 2, 5, die jeweils über Gliederverbinder 4 miteinander verbunden sind. Ein oberhalb dieser Glieder gelegene Anlagebereich von Seitenflächen der Glieder ist in Form eines Kugelgelenks ausgeführt, wobei ein balliger Vorsprung 14 an einem Glied 5 in eine entsprechend ausgeformte Pfanne 16 am anderen Glied 2 eintaucht, so dass eine Höhenzentrierung bei flächiger Lage erfolgt.

### Bezugszeichenliste

- 1: Gliederschürze
- 2: Glied
- 4: Gliederverbinder
- 5: Glied
- 6: Aufnahme
- 8: Aufnahme
- 10: Abrundung
- 12: Abrundung
- 14: Vorsprung
- 16: Pfanne
- 18: Großfläche
- 20: Seitenkante
- 22: Seitenkante
- 24: Hohlraum
- 26: Eckbereich
- 28: Großfläche
- 30: Kantenbereich
- 32: Kantenbereich
- 34: Bereich
- 36: Bereich
- 40: Gliederverbindernut
- 42: Gliederverbindernut
- 46: Schmalseite
- 48: Schmalseite
- s: Spalt

## Patentansprüche

1. Gliederschürze für eine Werkzeugmaschine mit einer Vielzahl von Gliedern (2, 5), die jeweils mittels zwischen zwei Gliedern (2, 5) angeordneten Gliederverbindern (4) miteinander verbunden sind, wobei die Glieder (2, 5) jeweils eine untere und eine obere Großfläche (18, 28) aufweisen, und wobei die Gliederverbinder (4) einander zuweisende Seiten flächen in erste und zweite gegenüberliegende seiten flächenabschnitte unterteilen, wobei die ersten gegenüberliegenden seiten flächenabschnitte abschnittsweise aneinanderliegen und über Zentrierelemente (14, 16) relativ zueinander positioniert sind, **dadurch gekennzeichnet, dass** an demersten Seiten flächenabschnitt des einen Gliedes (2) ein ballige sich zum benachbarten Glied (5) hin erstreckender Vorsprung (14) ausgebildet ist, der in der streckstellung in eine konkave Gelenkpfanne (16) am anderen Glied (5) eintaucht, wobei sich die Gelenkpfanne (16) und der Vorsprung (14) im Wesentlichen über die gesamte Höhe der ersten seiten flächeabschnitte erstrecken.

2. Gliederschürze nach Anspruch 1, wobei der Scheitel von der Pfanne (16) und des balligen Vorsprungs (14) etwa in der Mitte zwischen einer oberen Großfläche (18) und einer dieser zuweisenden Fläche einer Aufnahme (6, 8) für den Gliederverbinder (4) liegt.

3. Gliederschürze nach Anspruch 1 oder 2, wobei der Radius von der Pfanne (16) und von dem Vorsprung (14) etwa gleich ist.

4. Gliederschürze nach Anspruch 3, wobei der Radius größer als 1 mm ist, vorzugsweise größer als 1,60 mm.

5. Gliederschürze nach Anspruch 4, wobei die, die Pfanne (16) und den Vorsprung (14) begrenzenden, Seitenkanten abgerundet sind.

6. Gliederschürze nach einem der vorhergehenden Ansprüche, wobei etwa mittig in den jeweiligen Gliedern (2, 5) ein Hohlraum (24) eingebracht ist und dieser sich in etwa parallel zu den Seitenflächen vollständig durch das jeweilige Glied (2, 5) hindurch erstreckt.

7. Gliederschürze nach Anspruch 6, wobei der Hohlraum (24) eine quadratische Umfangsform hat.

8. Gliederschürze nach einem der vorhergehenden Ansprüche, wobei die Aufnahme (6, 8) des Gliederverbinders (4) zylinderförmig ist.

9. Gliederschürze nach Anspruch 8, wobei eine Gliederverbindernut (40, 42) mittig in die Glieder (2, 5) an den jeweiligen Schmalseiten (46, 48) eingebracht ist, die sich von der Schmalseite (46, 48) bis zu den Aufnahmen (6, 8) erstreckt und wobei der Abstand von Wandungen der Gliederverbindernut (40, 42) zueinander kleiner als der Durchmesser der zylinderförmigen Aufnahme (6, 8) ist.

10. Gliederschürze nach Anspruch 2 bis 10, wobei eine Abrundung (10, 12) zwischen einer unteren Großfläche 28 und einer dieser zuweisenden Fläche der Aufnahme (6, 8), an dem jeweiligen Glied (2, 5) ausgestaltet ist.

## Claims

1. Link-type apron for a machine tool, having a plurality of links (2, 5) each connected to one another by means of link connectors (4) arranged between two links (2, 5), wherein the links (2, 5) each have a lower and an upper major surface (18, 28), and wherein the link connectors (4) divide facing lateral surfaces into first and second opposing lateral surface portions, wherein the first opposing lateral surface portions abut against one another in sections and are positioned relative to one another via centring elements (14, 16), **characterised in that** on the first lateral surface portion of one link (2) there is formed a spherical projection (14) extending towards the adjacent link (5) and entering, in the extended position, a concave cup (16) on the other link (5), wherein the cup (16) and the projection (14) extend substantially over the entire height of the first lateral surface portions.

2. Link-type apron according to claim 1, wherein the vertex of the cup (16) and of the spherical projection (14) lies approximately midway between an upper major surface (18) and a surface facing it of a seat (6, 8) for the link connector (4).

3. Link-type apron according to claim 1 or 2, wherein the radius of the cup (16) and of the projection (14) is approximately the same.

4. Link-type apron according to claim 3, wherein the radius is larger than 1 mm, preferably larger than 1.60 mm.

5. Link-type apron according to claim 4, wherein the lateral edges defining the cup (16) and the projection (14) are rounded.

6. Link-type apron according to any one of the preceding claims, wherein approximately centrally in each link (2, 5) there is cavity (24) that extends completely through the respective link (2, 5) approximately parallel to the lateral faces.

7. Link-type apron according to claim 6, wherein the cavity (24) has a rectangular circumferential form.

8. Link-type apron according to any one of the preceding claims, wherein the seat (6, 8) of the link connector (4) is cylindrical.

9. Link-type apron according to claim 8, wherein a link connector groove (40, 42) is formed centrally in the links (2, 5) at the respective narrow sides (46, 48) and extends from the narrow side (46, 48) as far as the seats (6, 8), and wherein the spacing of the walls of the link connector groove (40, 42) from each other is smaller than the diameter of the cylindrical seat (6, 8).

10. Link-type apron according to claims 2 to 10, wherein a rounding (10, 12) is formed been a lower major surface (28) and a surface facing it of the seat (6, 8) on the respective link (2, 5).

## Revendications

1. Tablier à maillons pour une machine-outil avec une pluralité de maillons (2, 5) qui sont reliés entre eux respectivement à l'aide de dispositifs d'assemblage de maillons (4) disposés entre deux maillons (2, 5), les maillons (2, 5) présentant respectivement une grande surface inférieure et une grosse surface supérieure (18, 28), et les dispositif d'assemblage de maillons (4) divisant des surfaces latérales tournées les unes vers les autres en des premières et secondes sections de surfaces latérales opposées, les premières sections de surfaces latérales opposées reposant par endroits les unes sur les autres et étant positionnées les unes par rapport aux autres par des éléments de centrage (14, 16), **caractérisé en ce que** sur la première section de surface latérale d'un maillon (2) est réalisée une saillie (14) bombée, s'étendant vers le maillon (5) contigu, laquelle s'enfonce dans la position étirée dans un coussinet à rotule (16) concave sur l'autre maillon (5), le coussinet à rotule (16) et la saillie (14) s'étendant essentiellement sur toute la hauteur des premières sections de surfaces latérales.

2. Tablier de maillon selon la revendication 1, le sommet du coussinet (16) et de la saillie bombée (14) se trouvant à peu près au milieu entre une grande surface supérieure (18) et une surface tournée vers celle-ci d'un logement (6, 8) pour le dispositif d'assemblage de maillons (4).

3. Tablier de maillon selon la revendication 1 ou 2, le rayon du coussinet (16) et de la saillie (14) étant à peu près identique.

4. Tablier de maillon selon la revendication 3, le rayon étant supérieur à 1 mm, de préférence à 1,60 mm.

5. Tablier de maillon selon la revendication 4, les arêtes latérales délimitant le coussinet (16) et la saillie (14) étant arrondies.

6. Tablier de maillon selon l'une quelconque des revendications précédentes, un espace creux (24) étant introduit à peu près au milieu dans les maillons respectifs (2, 5) et celui-ci s'étendant à peu près parallèlement aux surfaces latérales complètement au travers du maillon (2, 5) respectif.

7. Tablier de maillon selon la revendication 6, l'espace creux (24) présentant une forme périphérique carrée.

8. Tablier de maillon selon l'une quelconque des revendications précédentes, le logement (6, 8) du dispositif d'assemblage de maillons (4) étant cylindrique.

9. Tablier de maillon selon la revendication 8, une rainure de dispositif d'assemblage de maillons (40, 42) étant introduite au milieu dans les maillons (2, 5) sur les petits côtés respectifs (46, 48), laquelle rainure s'étend du petit côté (46, 48) aux logements (6, 8) et la distance entre les parois de la rainure de dispositif d'assemblage de maillons (40, 42) étant plus petite que le diamètre du logement cylindrique (6, 8).

10. Tablier de maillon selon la revendication 2 à 10, un arrondi (10, 12) étant configuré entre une grande surface inférieure (28) et une surface tournée vers celle-ci du logement (6, 8) sur le maillon respectif (2, 5).
